# EUROPEAN PATENT APPLICATION

(11) **EP 0 752 536 A1**
(43) Date of publication of application: **08.01.1997**
(21) Application number: 96304732.9
(22) Date of filing: 26.06.1996
(51) Int. Cl.: F16B 13/08, F16L 3/233

(54) **Panel fastener**

(30) Priority: 07.07.1995 GB 9513866
(71) Applicant: BOWTHORPE PLC, Crawley, West Sussex RH10 2RZ (GB)
(72) Inventor: Blanks, Steven John, Winsford, Cheshire CW7 2TU (GB)
(74) Representative: Evans, Huw David Duncan

(57) **Abstract**

A fastener for fixing large panels of flexible plastics sheeting to scaffolding comprises a U-shaped strap 10, an elongate head 11 and a locking member 16. The strap 10 projects generally perpendicularly outwardly from one side of the head adjacent its rear end. An enlargement 14 is formed on the opposite side of the rear of the head, and the locking member 16 is attached to the rear of the head 11 behind the enlargement. In use, the head 11 is inserted through the sheet, and then rotated, such that the enlargement 14 is forced through the sheet, so as to enlarge the aperture formed therein sufficiently enough for the locking member 16 to pass therethrough. In this manner, the amount of effort required to attach the fastener to the sheeting is reduced.

## Description

This invention relates to a fastener for fixing panels in place, particularly panels of flexible sheeting.

Large panels of flexible plastics sheeting are often erected in front of buildings whilst building work or cleaning is carried out on the building. These so-called debris sheets prevent debris, dust, spray, etc. from falling onto the pavement or roadway below. Typically these debris sheets are attached to scaffolding poles by means of straps threaded through a pair of apertures in the sheeting. A disadvantage of this arrangement is that it is difficult for a person on one side of the sheeting to thread the straps through from the opposite side of the sheeting.

It has been proposed to provide panel fasteners having a barbed head which can be pushed through the panel from one side. The barbs recover their shape on the opposite side of the panel, and thus lock the fastener to the panel. The plastics material of debris sheets is very thick and hard wearing. Thus, a disadvantage of such known fasteners is that it is difficult to push the head through the plastics sheeting when the aperture in the panel is small or when no aperture exists.

We have now devised a fastener which can be securely and easily attached to panels, e.g. of flexible sheeting, from one side of the panel without gaining access to its other side.

In accordance with this invention, there is provided a fastener for attaching to a panel member, the fastener comprising a one-piece member having an elongate head, a strap and a locking member, the strap projecting generally perpendicularly outwardly from one side of the head adjacent a rear end thereof, the opposite side of the head comprising an enlarged portion which gradually increases the width of the head towards the rear end of the head, and the locking member being attached to the rear end of the head behind said inclined portion.

In use, the elongate head is inserted through the panel member, either by passing it through a small aperture in the panel, or by piercing the panel. The head is pushed through the panel until its enlarged portion abuts the front surface of the panel member, whereupon the strap is rotated through 90°, about the head, by lifting the strap away from the panel member, thereby twisting the head and forcing the enlarged portion through the aperture. The strap thus acts rather like a lever in order to reduce the amount of effort required to enlarge the aperture sufficiently enough for the locking member to pass therethrough.

Preferably the enlarged portion comprises an outer edge which curves outwardly and rearwardly towards the rear end of the head, the curved edge being centred adjacent the point at which the strap is connected to the head.

Preferably the head comprises a pointed insertion end to assist in piercing the panel member.

Preferably the locking member comprises a flexible barb attached to the head and arranged to pivotally deform towards said strap as the head of the fastener is inserted through said panel member.

Once the barb has passed through the aperture, the strap can be pulled back to cause the barb to deform outwardly to a position in which it is symmetrical with the head about the longitudinal axis of the strap.

Large forces are often applied to the fastener, and this can result in the fastener becoming detached from the panel. Thus, preferably the head comprises abutment means for limiting the pivotal movement of the barb away from the strap, to prevent the barb inverting, thereby allowing the fastener to release from the panel member.

Preferably the strap is connected to the head intermediate its opposite ends.

Preferably the fastener is formed from plastics material by injection moulding.

Preferably the strap is generally U-shaped in the asmoulded condition of the fastener.

Preferably opposite arms of the U-shaped strap extend perpendicular to the elongate head in the as-moulded condition of the fastener.

Preferably complementary engaging portions are formed on the opposite arms of the fastener respectively.

The fastener may be used to fix panels to structures outdoors. In high winds the force exerted on large panels can be very high. This force can be transmitted to the support structure through the fastener, with the risk that the structure may collapse. Thus, preferably the fastener comprises a portion of reduced thickness which will fracture if an excessive pulling force is applied to the panel.

An embodiment of this invention will now be described by way of example only and with reference to the accompanying drawings, in which:

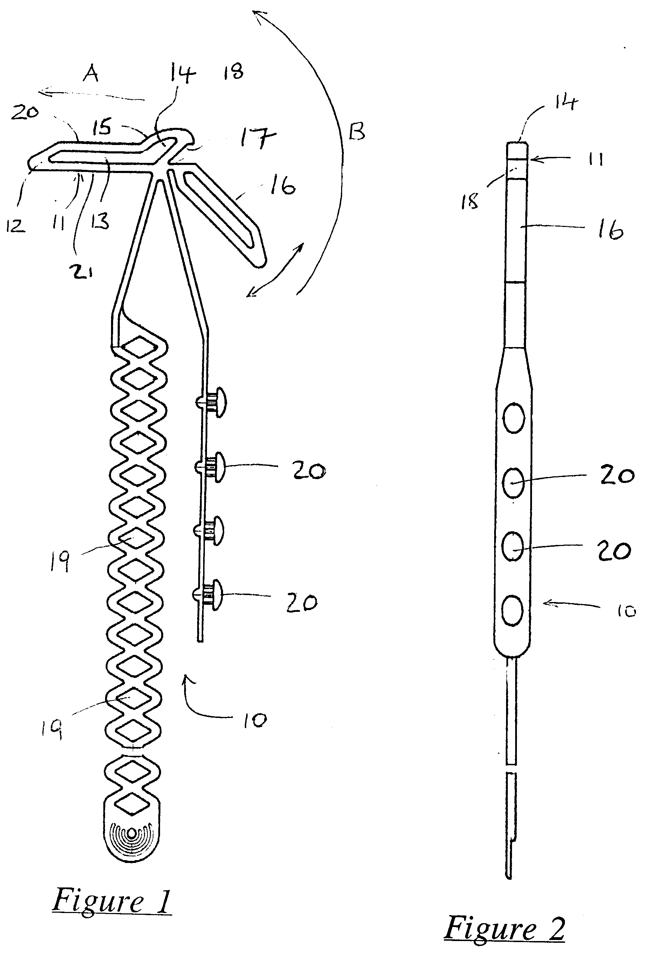

FIGURE 1 is a plan view of a debris sheet fastener in accordance with this invention; and
FIGURE 2 is a side view of the fastener of Figure 1.

Referring to the drawings, there is shown a one-piece, injection moulded plastics fastener comprising a U-shaped flexible strap 10, a head 11 and a locking barb 16.

The elongate head comprises a pointed insertion end 12, a central portion 13 and an enlarged rear portion 14. The central portion of the head comprises elongate, parallel opposite side edges 20,21. The enlarged rear portion 14 comprises a curved side edge 15 which extends outwardly and rearwardly from one side of the head, continuous with the elongate side edge 20 thereof. The U-shaped strap is connected intermediate its opposite ends to the rear of the head, such that in the as-moulded condition of the fastener, the opposite arms of the strap lie generally parallel to each other and extend generally perpendicular outwards from the opposite side edge 21 of the elongate head 11.

The locking barb 16 is pivotally attached to the rear end of the head 11 by means of a web 17. The rear end of the head 11 comprises an abutment surface 18 which abuts the locking barb 16 and limits the angle through which it can be pivoted.

In use, the pointed end 12 of the head 11 is inserted through a plastics debris sheet (in the direction A) until the enlarged portion 14 of the head abuts the surface of the sheet. It will be appreciated that in this position the arms of the U-shaped strap are lying generally parallel to the sheet. Next, the arms of the strap 10 are rotated through 90° about the head of the fastener (in direction B), by lifting the arms away from the debris sheet. This has the effect of forcing the enlarged portion 14 of the head through the debris sheet, so as to enlarge the aperture therein. At this point the arms of the strap are lying generally perpendicular to the debris sheet and in line with the enlarged aperture. The fastener is then pushed forwardly, to cause the locking barb 16 pivotally to deform towards the strap as it passes through the enlarged aperture.

Once the locking barb 16 has passed through the aperture it recovers to its original position. The strap 10 is then pulled back from the sheet, such that the locking barb 16 pivots until it abuts the abutment surface 18 of the head, at which point its axis co-extends with the axis of the head 11. In this configuration it is not possible to pull the fastener away from the panel.

One arm of the U-shaped strap 10 comprises a series of apertures 19 for receiving T-section studs 20 disposed on the opposite arm of the strap. The strap 10 can thus be formed into a loop around a scaffolding pole or other object to which the panel is to be fitted, and its opposite arms are then secured together.

## Claims

1. A fastener for attaching to a panel member, the fastener comprising a one-piece member having an elongate head, a strap and a locking member, the strap projecting generally perpendicularly outwardly from one side of the head adjacent a rear end thereof, the opposite side of the head comprising an enlarged portion which gradually increases the width of the head towards its rear end, and the locking member being attached to the rear end of the head behind said inclined portion.

2. A fastener as claimed in claim 1, in which the enlarged portion comprises an outer edge which curves outwardly and rearwardly towards the rear end of the head, the curved edge lying on an imaginary arc, which is centred adjacent the point at which the strap is connected to the head.

3. A fastener as claimed in claims 1 or 2, in which the head comprises a pointed insertion end.

4. A fastener as claimed in any preceding claim, in which the locking member comprises a flexible barb attached to the head and arranged to pivotally deform towards said strap as the head of the fastener is inserted through said panel member.

5. A fastener as claimed in claim 4, comprising abutment means for limiting the pivotal movement of the barb away from the strap.

6. A fastener as claimed in any preceding claim, in which the strap is connected to the head intermediate its opposite ends.

7. A fastener as claimed in claim 6, formed from moulded plastics material.

8. A fastener as claimed in claim 7, in which the strap is U-shaped in the as-moulded condition of the fastener.

9. A fastener as claimed in claim 8, in which opposite arms of the U-shaped strap extend perpendicular to the elongate head in the as-moulded condition of the fastener.

10. A fastener as claimed in claims 8 or 9, in which complementary engaging portions are formed on opposite arms of the fastener respectively.

11. A fastener as claimed in any preceding claim, comprising a portion of reduced thickness, which is arranged to fracture if an excessive pulling force is applied between the head and the strap.
